# EUROPÄISCHE PATENTSCHRIFT

(11) **EP 1 590 872 B1**
(45) Veröffentlichungstag und Bekanntmachung des Hinweises auf die Patenterteilung: **11.04.2012**
(21) Anmeldenummer: 03773512.3
(22) Anmeldetag: 13.10.2003
(51) Int. Cl.: H02K 1/17, H02K 5/128

(54) **PERMANENT ERREGTE ELEKTRISCHE MASCHINE**
PERMANENTLY EXCITED ELECTRIC MACHINE
MACHINE ELECTRIQUE A EXCITATION PERMANENTE

(30) Priorität: 23.01.2003 DE 10302454
(43) Veröffentlichungstag der Anmeldung: 02.11.2005
(73) Patentinhaber: ROBERT BOSCH GMBH, 70442 Stuttgart (DE)
(72) Erfinder: WEHRLE, Andreas, 77652 Offenburg (DE)
(86) Internationale Anmeldenummer: PCT/DE2003/003393
(87) Internationale Veröffentlichungsnummer: WO 2004/070916

(56) Entgegenhaltungen:
- DE-A- 10 152 502
- US-A- 4 873 461
- US-A- 5 881 446
- PATENT ABSTRACTS OF JAPAN vol. 2000, no. 25, 12. April 2001 (2001-04-12) & JP 2001 231189 A (MITSUBISHI ELECTRIC CORP), 24. August 2001 (2001-08-24)
- PATENT ABSTRACTS OF JAPAN vol. 010, no. 150 (E-408), 31. Mai 1986 (1986-05-31) & JP 61 010950 A (HITACHI SEISAKUSHO KK), 18. Januar 1986 (1986-01-18)

## Beschreibung

### Stand der Technik

Die vorliegende Erfindung betrifft eine permanent erregte elektrische Maschine, insbesondere einen Gleichstrommotor für Fahrzeuge, gemäß dem Oberbegriff des Anspruchs 1.

Aus der DE 1160080 A1 ist ein Gleichstrommotor bekannt, bei dem die Statorpole von rechteckförmigen Permanentmagneten und auf diese aufgesetzte Polschuhe gebildet werden. Die Permanentmagnete sind an einem Polgehäuse mittels Verklebung befestigt. Der Arbeitsluftspalt zwischen Stator und Rotor wird dabei durch die Polschuhe begrenzt.

Bei den bekannten Gleichstrommaschinen kann aus unterschiedlichen Gründen, wie z. B. in einer rauhen Betriebsumgebung eines Fahrzeugs, nicht zuverlässig ausgeschlossen werden, dass sich in Folge von Materialspannungen im Permanentmagneten Risse und Sprünge bilden, als deren Folge sich kleine Materialsplitter oder - stücke vom Permanentmagneten ablösen können. Wenn derartige Materialsplitter in den Arbeitsluftspalt gelangen, kann es zu einem Verklemmen oder Blockieren des Rotors kommen. Dies ist insbesondere bei Verwendung des Motors zur Lenkkraftunterstützung in Fahrzeugen kritisch. Von daher wurde vorgeschlagen, einen zylindrischen Magnetsplitterschutz zwischen die Magnete des Stators und den Rotor vorzusehen, wobei der Magnetsplitterschutz mittels zweier Abdeckringe am Stator gehalten wird.

Mit der US-A-4873461 ist ein Elektromotor bekannt geworden, bei dem an der Innenseite der Permanentmagnete eine Hülse angeordnet ist. Diese Hülse wird mit Zentrierscheiben radial nach außen gegen die Permanentmagnete gepresst.

Die JP-A-2001 231189 zeigt eine elektrische Maschine, bei der eine Magnetabdeckung aus einem dünnen Aluminiumblech innerhalb der Permanentmagnete angeordnet ist. Dabei ist die Magnetabdeckung zu deren Fixierung in Aussparungen von Magnethaltern eingepresst. Eine elektrische Maschine gemäß der US-A-5881446 weist am Innenumfang von Permanentmagnetpolen einen zylindrischen Körper auf, der an den Permanentmagneten anlegt Dabei weist der zylindrische Körper an seinem Stoßbereich Endabschnitte auf mit Kanten, die von der Axialrichtung abweichen. In einem Ausführungsbeispiel weist der zylindrische Körper einen Überlappungsbereich auf, der bezüglich der Umfangsrichtung in einem Hohlraum zwischen zwei Permanentmagneten angeordnet ist.

Die JP-A-61010950 weist ebenfalls eine elektrische Maschine auf, bei der eine Polbefestigungsplatte als elastischer Stahlstreifen ausgebildet ist. Dieser Stahlstreifen liegt an der Innenseite der Permanentmagnete an, und weist Ausbuchtungen auf, die in Hohlräume zwischen die Permanentmagnete hineinragen. Dabei wird durch die Bandlänge des Materialbandes der Durchmesser der Hülse festgelegt und durch Zentrierringe axial gehalten. Die Permanentmagnete weisen hierbei in Umfangsrichtung Abflachungen auf, in die hinein sich radial die Hülse erstreckt.

### Vorteile der Erfindung

Die erfindungsgemäße elektrische Maschine mit den Merkmalen des Anspruchs 1 hat demgegenüber den Vorteil, dass sie einen kostengünstigen und einfach herstellbaren Magnetsplitterschutz aufweist. Der Magnetsplitterschutz ist aus einem Rechteckzuschnitt gebildet und weist einen sich über die axiale Länge des Splitterschutzes erstreckenden überlappenden Bereich auf. Somit ergibt sich ein einfach herstellbarer Magnetsplitterschutz, welcher verhindert, dass absplitternde Materialstücke des Magneten in den Arbeitsluftspalt zwischen Stator und Rotor gelangen. Die Überlappung stellt dabei sicher, dass abgesplitterte Stücke nicht zwischen die beiden Lagen des überlappenden Bereichs zum Arbeitsluftspalt hin gelangen können. Weiterhin sind erfindungsgemäß Zentrierringe vorgesehen, die an beiden in Axialrichtung liegenden Enden des Magnetsplitterschutzes angeordnet sind. Dadurch kann eine Zentrierung des Magnetsplitterschutzes ermöglicht werden, so dass ein über die Länge konstanter und möglichst geringer Arbeitsluftspalt erhalten wird. Somit kann die erfindungsgemäße elektrische Maschine insbesondere in Fahrzeugen beispielsweise zur Lenkkraftunterstützung in Lenkgetrieben oder als elektrischer Motor zur Bremskrafteinleitung eingesetzt werden, bei denen eine hohe Funktionssicherheit gewährleistet sein muss, um ein unlenkbares Fahrzeug zu verhindern. Dabei können insbesondere auch die zur Zeit eingesetzten Überlastkupplungen zum Verhindern einer solchen unlenkbaren Situation des Fahrzeugs eingespart werden. Um einen verbesserten Magnetfluss bereitzustellen, weisen die Magneten Polabhebungen auf. Dabei ist der überlappende Bereich des Magnetsplitterschutzes besonders bevorzugt an diesen Polabhebungen angeordnet

Durch die in den weiteren Ansprüchen aufgeführten Maßnahmen sind vorteilhafte Weiterbildungen oder Verbesserungen der erfindungsgemäßen elektrischen Maschine möglich.

Besonders bevorzugt ist der Magnetsplitterschutz dabei derart ausgebildet, dass er sich im montierten Zustand selbsttätig radial nach außen an die Magnete anlegt und somit durch seine Eigenelastizität ohne weitere Hilfsmittel in Position hält. Die Zentrierringe dienen dabei als zusätzliche Sicherungseinrichtung.

Um eine schnelle und einfache Zentrierung, welche bei der Montage automatisch erhalten wird, zu ermöglichen, weisen die Zentrierringe jeweils eine sich verjüngenden Bereich auf.

Weiterhin bevorzugt schließen die Zentrierringe die Magneten zwischen dem Polgehäuse und dem Magnetsplitterschutz ein, so dass keine Möglichkeit besteht, dass Magnetsplitter aus diesem geschlossen Raum austreten können.

Weiterhin bevorzugt ist am Außenumfang des Magnetsplitterschutzes eine Klemmleiste angeordnet, um eine Befestigung des Magnetsplitterschutzes durch Klemmen der Klemmleiste zwischen zwei benachbarten Magneten zu erreichen. Weiterhin sichert die Klemmleiste den Magnetsplitterschutz gegen Verdrehung.

Um eine besonders einfache Montage zu ermöglichen, sind die axialseitigen Enden des Magnetsplitterschutzes vorzugsweise leicht radial nach außen gebogen.

Weiter bevorzugt ist der überlappende Bereich des Magnetsplitterschutzes derart gebildet, dass am überlappenden Bereich eine radial nach außen gerichtete Abstufung ausgebildet ist. Dadurch kann die Überlappung derart ausgestaltet werden, dass der Magnetsplitterschutz einen konstanten Innendurchmesser aufweist, so dass der Luftspalt zwischen Stator und Rotor konstant ist.

Um ein unbeabsichtigtes Lösen mit größter Sicherheit zu verhindern, ist der überlappende Bereich des Magnetsplitterschutzes vorzugsweise unverlierbar verbunden. Dies kann beispielsweise mittels Kleben oder Schweißen oder einer Verrastung der überlappenden Bereiche o. ä. realisiert werden.

Der sich verjüngende Bereich der Zentrierringe ist vorzugsweise als Konus oder als nach außen gewölbter Bereich oder als nach innen gewölbter Bereich oder als sich stufenförmig verjüngender Bereich ausgebildet.

### Zeichnung

Die Erfindung ist anhand eines in der Zeichnung dargestellten Ausführungsbeispiels in der nachfolgende Beschreibung näher erläutert. Es zeigen:
- Figur 1: eine schematische perspektivische Ansicht eines Magnetsplitterschutzes gemäß einem ersten Ausführungsbeispiel der vorliegenden Erfindung,
- Figur 2: eine schematische Schnittansicht des in Figur 1 gezeigten Magnetsplitterschutzes,
- Figur 3: eine schematische Schnittansicht eines Magnetsplitterschutzes gemäß einem zweiten Ausführungsbeispiel der vorliegenden Erfindung, und
- Figuren 4 bis 7: schematische Schnittansichten verschiedener Ausführungsformen von erfindungsgemäßen Zentrierringen.

### Beschreibung der Ausführungsbeispiele

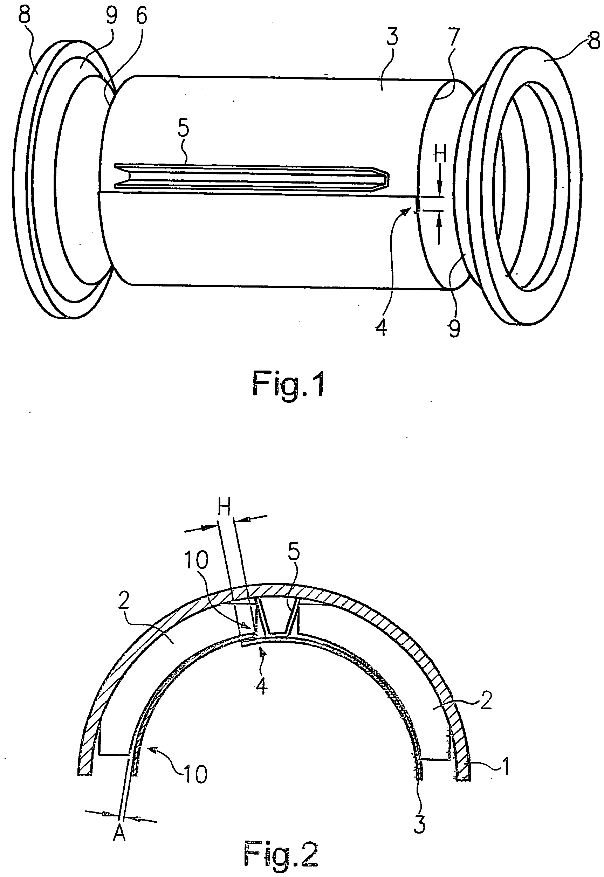

In den Figuren 1 und 2 ist ein Magnetsplitterschutz 3 gemäß einem ersten Ausführungsbeispiel der vorliegenden Erfindung dargestellt. Wie insbesondere aus Figur 1 erkennbar ist, ist der Magnetsplitterschutz 3 im Wesentlichen zylinderförmig ausgebildet und weist an seinem äußeren Umfang eine Klemmleiste 5 auf. Der Magnetsplitterschutz 3 ist aus einem rechteckigen Zuschnitt hergestellt und weist einen überlappenden Bereich 4 auf, welcher in Umfangsrichtung des Magnetsplitterschutzes 3 überlappend bzw. überdeckend ausgebildet ist und über die gesamte Axiallänge des Magnetsplitterschutzes 3 verläuft. Der überlappende Bereich 4 weist dabei eine vorbestimmte Überlappungshöhe H auf, um über eine gewisse Umfangslänge ein Anliegen der beiden stoßseitigen Enden des Magnet-splitterschutzes zu erreichen.

Im in Figur 2 gezeigten montierten Zustand ist die Klemmleiste 5 des Magnetsplitterschutzes 3 zwischen zwei Permanentmagneten 2, 2 angeordnet. Die Klemmleiste 5 ist im Schnitt im Wesentlichen V-förmig ausgebildet und klemmt zwischen den beiden Magneten, um den Magnetsplitterschutz in Position zu halten. Dabei dient die Klemmleiste 5 auch als Verdrehsicherung gegen ein Verdrehen des Magnetsplitterschutzes. Dadurch kann der überlappende Bereich 4 des Magnetsplitterschutzes 3 an einer Polabhebung 10 des Permanentmagneten 2 angeordnet werden, an der sich die Dicke des Permanentmagneten 2 kontinuierlich bis zu einem vorbestimmten Betrag A reduziert (vgl. Figur 2). Somit ist der überlappende Bereich 4 radial außerhalb des Durchmessers des Magnetsplitterschutzes angeordnet und es kann ein konstanter Innendurchmesser am Magnetsplitterschutz 3 realisiert werden. Dadurch wird sichergestellt, dass der Luftspalt zwischen dem Stator und dem nicht dargestellten Rotor der elektrischen Maschine konstant bleibt bzw. im Vergleich mit dem Stand der Technik leistungssteigernd reduziert werden kann.

Zur Zentrierung des Magnetsplitterschutzes 3 wird der zylinderförmige Magnetsplitterschutz mittels zweier Zentrierringe 8 zentriert, welche jeweils an den in Axialrichtung liegenden Enden 6, 7 des Magnetsplitterschutzes 3 angeordnet sind (vgl. Figur 1). Die Zentrierringe 8 weisen einen sich verjüngenden Bereich 9 auf, welcher während der Montage den Magnetsplitterschutz von dessen Innenseite her zentriert. Dabei ist es auch möglich, dass der Magnetsplitterschutz leicht aufgespreizt wird, um eine zusätzliche Haltefunktion durch die Zentrierringe 8 auszuüben. Diese Aufspreizung darf jedoch nur so weit gehen, dass eine ständige Überdeckung im überlappenden Bereich 4 vorhanden ist, um mit Sicherheit zu verhindern, dass eventuell abgesplitterte Magnetsplitter in den Luftraum zwischen Stator und Rotor gelangen. Es sei weiterhin angemerkt, dass der Magnetsplitterschutz 3 derart ausgebildet ist, dass er im montierten Zustand selbsttätig eine axial nach außen gerichtete Aufspreizkraft aufbringt, so dass er eng an den Magneten 2 anliegt.

Somit kann durch den erfindungsgemäßen Magnetsplitterschutz sichergestellt werden, dass keine absplitternden Teilchen in den Luftspalt zwischen Stator und Rotor gelangen und dort im Extremfall zu einem Blockieren der elektrischen Maschine führen. Dabei ist der erfindungsgemäße Magnetsplitterschutz 3 sehr einfach aufgebaut und kann kostengünstig hergestellt und auch einfach montiert werden.

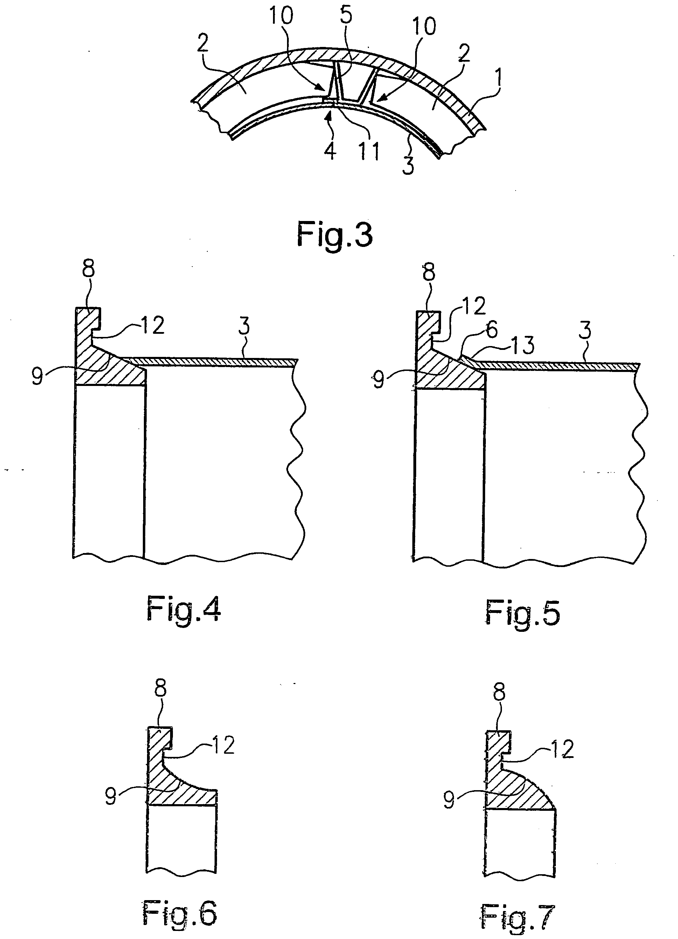

Figur 3 zeigt einen Magnetsplitterschutz gemäß einem zweiten Ausführungsbeispiel der vorliegenden Erfindung. Im Unterschied zum ersten Ausführungsbeispiel ist beim zweiten Ausführungsbeispiel am überlappenden Bereich 4 ein abgestufter Bereich 11 ausgebildet, so dass sich der innere Teil des überlappenden Bereichs unmittelbar an den Absatz des abgestuften Bereichs 11 anlegen kann. Dadurch wird ein konstanter Innendurchmesser des Magnetsplitterschutzes 3 erreicht, so dass der im ersten Ausführungsbeispiel vorhandene kleine Versatz am überlappenden Bereich eliminiert ist. Um dabei ausreichend Platz in Radialrichtung nach außen zu haben, ist der überlappende Bereich 4 dabei an der Polabhebung 10 des Magneten 2 angeordnet, an der die Dicke des Magneten bis zu dem Betrag A kontinuierlich reduziert ist (vgl. Figur 2). Ansonsten entspricht dieses Ausführungsbeispiel dem ersten Ausführungsbeispiel, so dass auf die dort gegebene Beschreibung verwiesen werden kann.

In den Figuren 4 bis 7 sind verschiedene Ausgestaltungsmöglichkeiten der Zentrierringe 8 dargestellt. Bei dem in Figur 4 gezeigten Ausführungsbeispiel ist der sich verjüngende Bereich 9 als Konus ausgebildet. Weiterhin ist eine Ausnehmung 12 am Zylinderring 8 ausgebildet, in welcher der Magnetsplitterschutz 3, genauer ein axialseitiges Ende des Magnetsplitterschutzes, in seiner Endmontageposition angeordnet ist. Dabei kann ein leichtes Klemmen in der Ausnehmung 12 vorgesehen werden, so dass eine sichere Verbindung zwischen dem Magnetsplitterschutz 3 und den Zentrierringen 8 herstellbar ist. Bei dem in Figur 5 gezeigten Ausführungsbeispiel ist der sich verjüngende Bereich ebenfalls konisch ausgebildet, jedoch ist am Ende 6 des Magnetsplitterschutzes 3 ein radial nach außen gerichteter Bereich 13 ausgebildet, so dass eine einfache Montage ermöglicht wird. Das Ausführungsbeispiel gemäß Figur 6 zeigt einen sich verjüngenden Bereich 9, welcher als nach innen gewölbter Bereich ausgebildet ist, und das in Figur 7 gezeigte Ausführungsbeispiel zeigt einen sich verjüngenden Bereich 9, welcher als nach außen gewölbter Bereich ausgebildet ist.

Ein weiterer Vorteil der Erfindung besteht darin, dass neben dem Zentrieren mittels der Zentrierringe 8 auch eventuell vorhandene Fertigungstoleranzen ausgeglichen werden können. Weiterhin können die Zentrierringe 8 im montierten Zustand den Raum, in welchem die Magnete 2 angeordnet sind, vollständig abschließen, so dass keine Möglichkeit besteht, dass Magnetsplitter nach außen dringen können.

Darüber hinaus bietet der sich überlappende Bereich 4 auch noch die Möglichkeit, auftretende Temperaturänderungen während des Betriebes auszugleichen, da der Magnetsplitterschutz 3 durch den überlappenden Bereich 4 in Umfangsrichtung in gewissem Ausmaß aufweitbar ist, ohne dass die Schutzfunktion verringert wird. Dabei kann trotzdem ein konstanter Luftspalt zwischen Stator und Rotor aufrechterhalten werden.

## Patentansprüche

1. Elektrische Maschine, insbesondere Gleichstrommotor für Fahrzeuge, mit einem mehrpoligen Stator, der ein ringförmiges Polgehäuse (1) und mehrere Magnete (2) aufweist, die an der Innenfläche des Polgehäuses (1) angeordnet sind, und einem Magnetsplitterschutz (3), der die Magnete (2) in radialer Richtung nach innen hin zum Rotor abschirmt, wobei der Magnetsplitterschutz (3) aus einem rechteckigen Zuschnitt gebildet ist, einen in Umfangsrichtung über die axiale Länge des Magnetsplitterschutzes (3) verlaufenden überlappenden Bereich (4) aufweist und an den in Axialrichtung liegenden Enden (6, 7) des Magnetsplitterschutzes (3) jeweils ein Zentrierring (8) angeordnet ist, um den Magnetsplitterschutz (3) zu zentrieren, **dadurch gekennzeichnet dass** die Magnete (2) eine Polabhebung (10) aufweisen und der überlappende Bereich (4) des Magnetsplitterschutzes (3) an der Polabhebung (10) angeordnet ist.

2. Elektrische Maschine nach Anspruch 1, **dadurch gekennzeichnet, dass** der Magnetsplitterschutz (3) im montierten Zustand selbsttätig eine radial nach außen gerichtete Vorspannkraft auf die Magnete (2) ausübt.

3. Elektrische Maschine nach einem der vorhergehenden Ansprüche, **dadurch gekennzeichnet, dass** die Zentrierringe (8) jeweils einen sich verjüngenden Bereich (9) aufweisen.

4. Elektrische Maschine nach einem der vorhergehenden Ansprüche, **dadurch gekennzeichnet, dass** die Zentrierringe (8) die Magnete (2) zwischen dem Polgehäuse (1) und dem Magnetsplitterschutz (3) einschließen.

5. Elektrische Maschine nach einem der vorhergehenden Ansprüche, **dadurch gekennzeichnet, dass** der überlappende Bereich (4) radial außerhalb des Durchmessers des Magnetsplitterschutzes (3) angeordnet ist.

6. Elektrische Maschine nach einem der vorhergehenden Ansprüche, **gekennzeichnet durch** eine Klemmleiste (5), die am Außenumfang des Magnetsplitterschutzes (3) angeordnet ist und im montierten Zustand zwischen zwei Magneten (2) angeordnet ist.

7. Elektrische Maschine nach einem der vorhergehenden Ansprüche, **dadurch gekennzeichnet, dass** die axialseitigen Enden (6, 7) des Magnetsplitterschutzes (3) leicht radial nach außen gebogen sind.

8. Elektrische Maschine nach einem der vorhergehenden Ansprüche, **dadurch gekennzeichnet, dass** der Magnetsplitterschutz (3) am überlappenden Bereich (4) einen abgestuften Bereich (11) aufweist, so dass der Magnetsplitterschutz (3) im montierten Zustand einen konstanten Innendurchmesser aufweist.

9. Elektrische Maschine nach einem der vorhergehenden Ansprüche, **dadurch gekennzeichnet, dass** der Magnetsplitterschutz (3) am überlappenden Bereich (4) unverlierbar verbunden ist.

10. Elektrische Maschine nach einem der vorhergehenden Ansprüche, **dadurch gekennzeichnet, dass** der sich verjüngende Bereich (9) der Zentrierringe (8) als Konus oder als nach außen gewölbter Bereich oder als nach innen gewölbter Bereich oder als sich stufenförmig verjüngender Bereich ausgebildet ist.

## Claims

1. Electrical machine, in particular DC motor for vehicles, having a multipole stator which has an annular pole housing (1) and a plurality of magnets (2) which are arranged on the inner surface of the pole housing (1), and having a magnet splinter guard (3) which shields the magnets (2) in the radial direction inwards in the direction of the rotor, with the magnet splinter guard (3) being formed from a rectangular blank, having an overlapping region (4) which runs in the circumferential direction over the axial length of the magnet splinter guard (3) and on which a centring ring (8) in each case being arranged at the axial ends (6, 7) of the magnet splinter guard (3) in order to centre the magnet splinter guard (3), **characterized in that** the magnets (2) have a detached pole portion (10) and the overlapping region (4) of the magnet splinter guard (3) is arranged at the detached pole portion (10).

2. Electrical machine according to Claim 1, **characterized in that** the magnet splinter guard (3) automatically exerts a radially outwardly directed pretensioning force on the magnets (2) in the mounted state.

3. Electrical machine according to one of the preceding claims, **characterized in that** the centring rings (8) each have a tapering region (9).

4. Electrical machine according to one of the preceding claims, **characterized in that** the centring rings (8) enclose the magnets (2) between the pole housing (1) and the magnet splinter guard (3).

5. Electrical machine according to one of the preceding claims, **characterized in that** the overlapping region (4) is arranged radially outside the diameter of the magnet splinter guard (3).

6. Electrical machine according to one of the preceding claims, **characterized by** a clamping strip (5) which is arranged on the outer circumference of the magnet splinter guard (3) and is arranged between two magnets (2) in the mounted state.

7. Electrical machine according to one of the preceding claims, **characterized in that** the axial ends (6, 7) of the magnet splinter guard (3) are bent slightly radially outwards.

8. Electrical machine according to one of the preceding claims, **characterized in that** the magnet splinter guard (3) has a stepped region (11) in the overlapping region (4), and therefore the magnet splinter guard (3) has a constant inside diameter in the mounted state.

9. Electrical machine according to one of the preceding claims, **characterized in that** the magnet splinter guard (3) is captively connected in the overlapping region (4).

10. Electrical machine according to one of the preceding claims, **characterized in that** the tapering region (9) of the centring rings (8) is in the form of a cone or in the form of an outwardly curved region or in the form of an inwardly curved region or in the form of a region which tapers in a stepped manner.

## Revendications

1. Machine électrique, en particulier moteur à courant continu pour véhicules, présentant
un stator multipolaire doté d'un boîtier polaire annulaire (1) et de plusieurs aimants (2) disposés sur la surface intérieure du boîtier polaire (1),
et une protection (3) contre la fragmentation des aimants qui recouvre les aimants (2) dans la direction radiale intérieure en direction du rotor,
la protection (3) contre la fragmentation des aimants étant formée d'un flan rectangulaire, formant dans la direction périphérique une partie (4) en superposition qui s'étend sur la longueur axiale de la protection (3) contre la fragmentation des aimants,
une bague de centrage (8) étant disposée sur chacune des extrémités (6, 7) situées dans la direction axiale de la protection (3) contre la fragmentation des aimants pour centrer la protection (3) contre la fragmentation des aimants,
**caractérisée en ce que**
les aimants (2) présentant un retrait polaire (10) et la partie en superposition (4) de la protection (3) contre la fragmentation des aimants étant disposés sur le retrait polaire (10).

2. Machine électrique selon la revendication 1, **caractérisée en ce que** la protection (3) contre la fragmentation des aimants exerce automatiquement en position montée une force de précontrainte orientée radialement vers l'extérieur sur les aimants (2).

3. Machine électrique selon l'une des revendications précédentes, **caractérisée en ce que** les bagues de centrage (8) présentant chacune une partie rétrécie (9).

4. Machine électrique selon l'une des revendications précédentes, **caractérisée en ce que** les bagues de centrage (8) enferment les aimants (2) entre le boîtier polaire (1) et la protection (3) contre la fragmentation des aimants.

5. Machine électrique selon l'une des revendications précédentes, **caractérisée en ce que** la partie (4) en superposition est disposée radialement à l'extérieur du diamètre de la protection (3) contre la fragmentation des aimants.

6. Machine électrique selon l'une des revendications précédentes, **caractérisée par** une languette de serrage (5) disposée à la périphérie extérieure de la protection (3) contre la fragmentation des aimants et disposée à l'état monté entre deux aimants (2).

7. Machine électrique selon l'une des revendications précédentes, **caractérisée en ce que** les extrémités axiales (6, 7) de la protection (3) contre la fragmentation des aimants sont légèrement rabattues radialement vers l'extérieur.

8. Machine électrique selon l'une des revendications précédentes, **caractérisée en ce que** la protection (3) contre la fragmentation des aimants présente sur la partie (4) en superposition une partie (11) en gradin de telle sorte que la protection (3) contre la fragmentation des aimants présente à l'état monté un diamètre intérieur constant.

9. Machine électrique selon l'une des revendications précédentes, **caractérisée en ce que** la protection (3) contre la fragmentation des aimants est reliée de manière non libérable à la partie en superposition (4).

10. Machine électrique selon l'une des revendications précédentes, **caractérisée en ce que** la partie rétrécie (9) des bagues de centrage (8) est configurée comme cône, comme partie bombée vers l'extérieur, comme partie bombée vers l'intérieur ou comme partie rétrécie en gradin.
